# EUROPÄISCHE PATENTANMELDUNG

(11) **EP 2 826 609 A1**
(43) Veröffentlichungstag der Anmeldung: **21.01.2015**
(21) Anmeldenummer: 13176992.9
(22) Anmeldetag: 18.07.2013
(51) Int. Cl.: B28D 7/00, B23Q 15/12

(54) **Automatische Anbohrhilfe**

(71) Anmelder: HILTI Aktiengesellschaft, 9494 Schaan (LI)
(72) Erfinder: Drexl, Tobias, 86947 Weil (DE); Pfeiffer, Ralf, 86932 Pürgen Stoffen (DE)
(74) Vertreter: Hilti Aktiengesellschaft Corporate Intellectual Property

(57) **Zusammenfassung**

Verfahren zum Steuern einer Werkzeugmaschine mit den Verfahrensschritten
- Festlegen der Drehzahl eines Antriebs auf einen ersten Wert,
- Messen einer ersten Amplitude eines Signals,
- Filtern des Signals in einem Frequenzbereich,
- Messen einer zweiten Amplitude des gefilterten Signals,
- Reduzieren der Drehzahl des Antriebs auf einen zweiten Wert, wenn die erste Amplitude eine erste Grösse übersteigt und die zweite Amplitude eine zweite Grösse übersteigt, und
- Schrittweises Steigern der Drehzahl des Antriebs auf den ersten Wert, wobei jeder Steigerungsschritt der Drehzahl erst erfolgt, nachdem für ein Zeitintervall die erste Amplitude unterhalb der ersten Grösse und die zweite Amplitude unterhalb der zweiten Grösse verbleibt.

Eine Werkzeugmaschine zur Anwendung dieses Verfahrens, enthaltend einen Antrieb für eine Werkzeug, einen Beschleunigungssensor zum Messen einer ersten Amplitude und einer zweiten Amplitude eines Signals, einen Filter zum Filtern des Signals in einem vorbestimmten Frequenzbereich und eine Steuereinheit zur Steuerung wenigstens der Drehzahl des Antriebs.

## Beschreibung

Die vorliegende Erfindung bezieht sich auf ein Verfahren zum Steuern einer Werkzeugmaschine enthaltend einen Antrieb zum Antreiben eines Werkzeugs und eine Steuereinheit beim Bearbeiten eines Werkstücks.

Des Weiteren bezieht sich die Erfindung auf eine Werkzeugmaschine zur Anwendung dieses Verfahrens.

Bei der Werkzeugmaschine kann es sich z.B. um eine Kernbohrmaschine zum Kernbohren handeln.

Eine Kernbohrmaschine zerspant unter Zuhilfenahme einer zylinderförmigen Diamantbohrkrone eine ringförmige Nut in einen zu bearbeitenden Werkstoff, um in diesem einen zylindrischen Bohrkern zu bilden, der dann als Ganzes aus dem Bohrloch entfernt werden kann. Bei dem Werkstoff kann es sich beispielsweise um Beton, Mauerwerk, Gestein oder ähnliches handeln.

In den einzelnen Phasen einer Kernbohrung kann es jeweils zu einer Anzahl an technischen Problemen kommen. Insbesondere in der sogenannten Anbohrphase, d.h. in der Phase wenn die Bohrkrone auf das zu bearbeitende Werkstück aufgesetzt und der Kernbohrvorgang begonnen wird, können an der Bohrkrone und an der Kernbohrmaschine ungewünschte Schwingungen bzw. Vibrationen entstehen. Häufig können diese Schwingungen bzw. Vibrationen auch zu Resonanzen in der Bohrkrone und Kernbohrmaschine führen, die zu einer erheblichen Beeinträchtigung des Bohrvorgangs führen kann.

Für gewöhnlich entstehen diese Schwingungen bzw. Vibrationen und letztendlich auch die Resonanzen dadurch, dass die Bohrkrone in der frühen Phase des Kernbohrvorgangs (Anbohrphase) noch nicht tief genug in dem zu bearbeitenden Werkstoff eingedrungen ist und die sich drehende Bohrkrone daher noch keine ausreichende Führung in dem Bohrloch erfährt. Es kann jedoch auch sein, dass in späteren Phasen des Kernbohrens, wenn die Bohrkrone vermeintlich bereits ausreichend Führung im Bohrloch hat, es zu unerwünschten Schwingungen bzw. Vibrationen und als Folge daraus zu Resonanzen kommen kann. Auch in diesen späteren Bohrphasen führen diese Schwingungen, Vibrationen und Resonanzen Schwingungen, Vibrationen sowie Resonanzen sollten generell bei einem Kernbohrvorgang vermieden werden, da hierdurch hohe mechanische und dynamische Belastungen an den Bohrwerkzeugen wirken, die wiederum zu Beschädigungen an der Bohrkrone, der Bohrmaschine und/oder dem Bohrständer führen können. Darüber hinaus kann es hierdurch zu schlechten Bohrergebnissen durch schiefe Bohrlöcher kommen, welche nicht in dem vorbestimmten Winkel (z.B. 90°) zur Oberfläche des zu bearbeitenden Werkstoffs verlaufen.

Des Weiteren verursachen diese Schwingungen, Vibrationen sowie Resonanzen auch gewisse Sicherheitsrisiken. Ein Anwender könnte in Versuchung gebracht werden provisorisch, d.h. durch das Anlegen von Hilfsmitteln an die Bohrkrone, beispielsweise dem eigenen Fuss, die Schwingungen und Vibrationen zu mindern. Dies kann jedoch zu Verletzungen des Anwenders und/oder Beschädigungen an den Kernbohrwerkzeugen führen.

Als Massnahme zur Vermeidung der unerwünschten Schwingungen und Vibrationen werden für gewöhnlich die Drehzahl des Bohrantriebs und damit die Bohrgeschwindigkeit reduziert, wodurch insgesamt ein langsamerer Bohrvortrieb erzeugt wird. Als Folge daraus verlängert sich der Kernbohrvorgang, wodurch der Bohrvorgang insgesamt ineffizient wird.

Aufgabe der vorliegenden Erfindung besteht in dem Bereitstellen eines Verfahrens zum Steuern einer Werkzeugmaschine enthaltend einen Antrieb zum Antreiben eines Werkzeugs und eine Steuereinheit beim Bearbeiten eines Werkstücks. Darüber hinaus besteht die Aufgabe der vorliegenden Erfindung ausserdem im Bereitstellen einer Systemvorrichtung zur Anwendung dieses Verfahrens. Durch dieses erfindungsgemässe Verfahren sowie der erfindungsgemässen Systemvorrichtung werden die vorstehend genannten Nachteile umgangen sowie die Bearbeitung des Werkstoffs sicherer und effizienter gestaltet.

Die Aufgabe wird im Wesentlichen durch die Merkmale des unabhängigen Anspruchs 1 und 2 gelöst. Weitere vorteilhafte Weiterentwicklungen ergeben sich aus den entsprechenden Unteransprüchen.

Demnach ist ein Verfahren zum Steuern einer Werkzeugmaschine enthaltend einen Antrieb zum Antreiben eines Werkzeugs und eine Steuereinheit beim Bearbeiten eines Werkstücks vorgesehen, mit den Verfahrensschritten
- Festlegen der Drehzahl des Antriebs auf einen ersten Wert,
- Messen einer ersten Amplitude eines Signals,
- Filtern des Signals in einem vorbestimmten Frequenzbereich,
- Messen einer zweiten Amplitude des gefilterten Signals,
- Reduzieren der Drehzahl des Antriebs auf einen zweiten Wert, wenn die erste Amplitude eine erste vorbestimmte Grösse übersteigt und die zweite Amplitude eine zweite vorbestimmte Grösse übersteigt, und
- Schrittweises Steigern der Drehzahl auf den ersten Wert, wobei jede Steigerungsschritt der Drehzahl erst erfolgt, nachdem für ein vorbestimmtes Zeitintervall die erste Amplitude unterhalb der ersten vorbestimmten Grösse und die zweite Amplitude unterhalb der zweiten vorbestimmten Grösse verbleibt.

Des Weiteren ist eine Werkzeugmaschine zur Anwendung dieses Verfahrens vorgesehen, enthaltend
- einen Antrieb zum Antreiben eines Werkzeugs,
- einen Beschleunigungssensor zum Messen einer ersten Amplitude und einer zweiten Amplitude eines Signals;
- einen Filter zum Filtern des Signals in einem vorbestimmten Frequenzbereich, und
- eine Steuereinheit zur Steuerung wenigstens der Drehzahl des Antriebs.

Die Erfindung wird bezüglich vorteilhafter Ausführungsbeispiele näher erläutert, hierbei zeigt
- Fig. 1: eine erfindungsgemässe Werkzeugmaschine mit einem Werkzeug an einem Werkzeugständer zum Kernbohren in einen horizontal ausgerichteten Werkstoff;
- Fig. 2: die erfindungsgemässe Werkzeugmaschine mit dem Werkzeug an dem Werkzeugständer zum Kernbohren in einen vertikal ausgerichteten Werkstoff;
- Fig. 3: ein Ablaufdiagramm des erfindungsgemässen Steuerungsverfahrens;
- Fig. 4: ein Ablaufdiagramm einer Resonanzüberprüfung als Bestandteil des erfindungsgemässen Steuerungsverfahrens; und
- Fig. 5: eine Grafik über die zeitliche Anpassung der Motordrehzahl während des Bohrvorgangs.

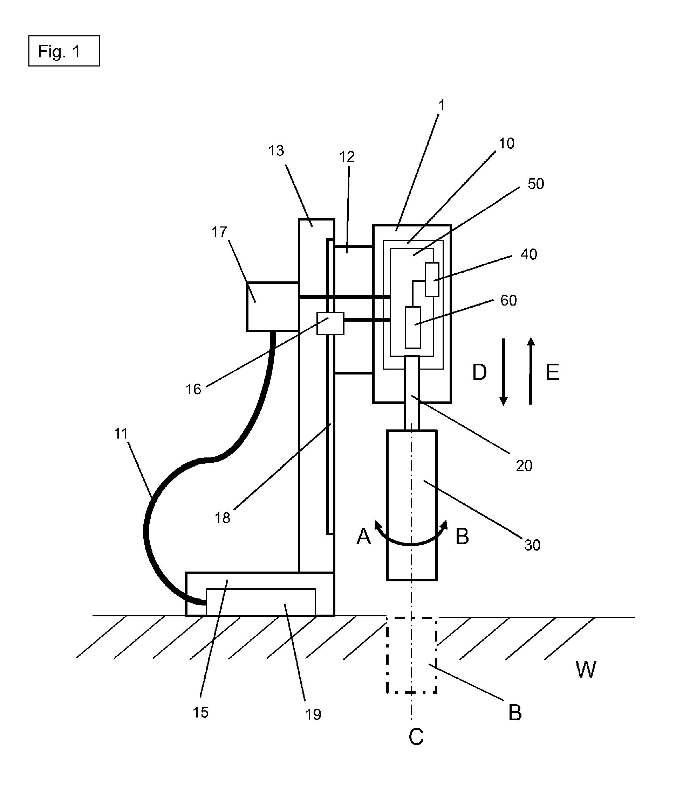

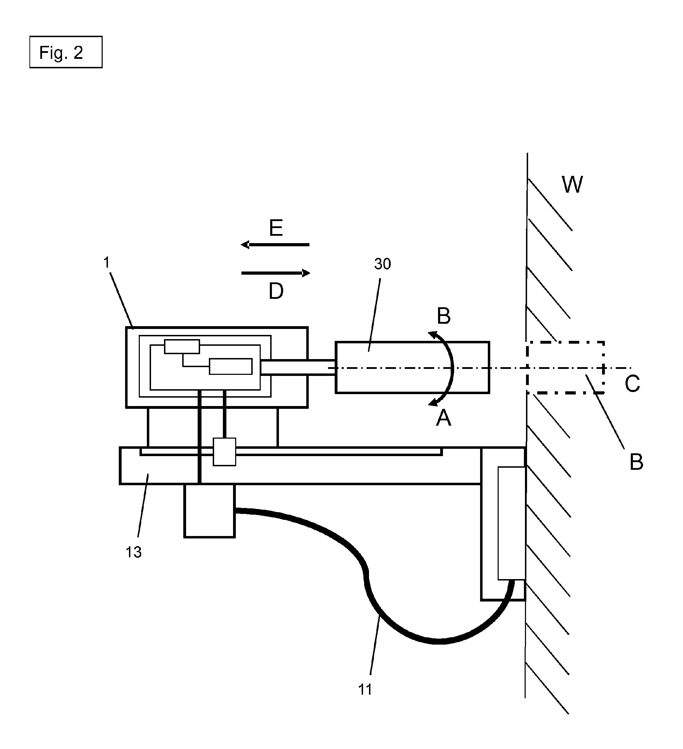

Fig. 1 und 2 zeigt eine Werkzeugmaschine zum Bearbeiten eines Werkstoffs, wie z.B. Beton, Gestein, Mauerwerk oder ähnlichem.

Die Werkzeugmaschine 1 ist in Form einer Kernbohrmaschine ausgestaltet und enthält einen Antrieb 10, eine Antriebswelle 20, ein Werkzeug 30 in Form einer Bohrkrone, einen Beschleunigungssensor 40, eine Steuereinheit 50 und einen Filter 60.

Wie ebenfalls in Fig. 1 dargestellt, ist die Werkzeugmaschine 1 mit Hilfe einer Vorschubeinrichtung 12 an einem Werkzeugständer 13 lösbar befestigt. Die Vorschubeinrichtung 12 dient dazu, die Werkzeugmaschine 1 automatisch mit Hilfe eines (nicht gezeigten) Antriebs relativ zum Werkzeugständer 13 reversibel entlang den Pfeilrichtungen D und E zu bewegen. Der Werkzeugständer 13 enthält eine Führungseinrichtung 14, ein Fußelement 15, einen Positions- und Wegsensor 16 und eine Vakuumpumpe 17. Die Führungseinrichtung 14 enthält ein längliches Führungselement 18, an dem die Vorschubeinrichtung 12 gehalten wird und entlang den Pfeilrichtungen D und E reversibel bewegt werden kann. An der Vorschubeinrichtung 12 ist wiederum die Werkzeugmaschine 1 lösbar befestigt. Mit Hilfe der Vorschubeinrichtung 12 und der Führungseinrichtung 14 kann die Werkzeugmaschine 1 kontrolliert zu und von einem zu bearbeitenden Werkstoff W bewegt werden. Das Fußelement 15 enthält ein Befestigungselement 19, welches mit der Vakuumpumpe 17 in Form eines Schlauches 11 in Verbindung steht. Durch die Vakuumpumpe 17 kann in dem Befestigungselement 19 ein Vakuum erzeugt werden, wodurch der Werkzeugständer 13 und die daran befestigte Werkzeugmaschine 1 an einem Untergrund bzw. an dem zu bearbeitenden Werkstoff W gehalten werden kann. Die Vakuumpumpe 17 ist mit der Steuereinheit 50 über eine Datenleitung 51 verbunden. Mit Hilfe der Steuereinheit 50 kann die Vakuumpumpe 17 gesteuert und geregelt werden, wodurch der Anpresskraft des Befestigungselements 19 in dem Fußelement 15 gesteuert und geregelt werden kann. Wie in Fig. 2 gezeigt, kann der Werkzeugständer 13 mit der Werkzeugmaschine 1 auch an einer vertikalen Wand bzw. an einem vertikalen Werkstoff W befestigt werden, um eine horizontale Kernbohrung in den Werkstoff W durchzuführen.

Der Positions- und Wegsensor 16 ist zwischen dem länglichen Führungselement 18 der Führungseinrichtung 14 sowie der Vorschubeinrichtung 12 positioniert und steht in Verbindung mit der Steuereinheit 50 sowie mit der Vorschubeinrichtung 12. Mit Hilfe der Steuereinheit 50 können die gemessenen Daten und Parameter des Positions- und Wegsensor 16 gespeichert, verarbeitet und anderen Arbeitsvorgänge zur Verfügung gestellt werden. Der Positions- und Wegsensor 16 dient zum einen dazu die Position der Vorschubeinrichtung 12 relativ zum länglichen Führungselement 18 bzw. zu einer vorbestimmten Startposition zu bestimmen und zu anderen die Wegstrecke zu messen, die die Vorschubeinrichtung 12 an dem länglichen Führungselement 18 zurücklegt. Anhand der Positions- und Wegstreckenmessungen kann stets die Position der Werkzeugmaschine 1 bzw. des Werkzeugs 30 zum Werkstoff W sowie die bereits zurückgelegte Wegstrecke der Werkzeugmaschine 1 bzw. des Werkzeugs 30 im Werkstoff W, d.h. im Bohrloch B, bestimmt werden. Hierdurch lässt sich beispielsweise die Bohrtiefe bzw. die verbleibende Zeit oder Wegstrecke bis zum Erreichen der gewünschten Bohrtiefe bestimmen. Darüber hinaus kann durch die Positions- und Wegstreckenmessung auch ermittelt werden, dass ein Werkstoff W, wie z.B. eine Wand, durchbohrt wurde, wenn die Stärke des zu bearbeitenden Werkstoffs W bekannt ist. Durch die Übermittlung der Information an die Steuereinheit 50, dass der Werkstoff W durchbohrt wurde, kann die Steuereinheit 50 die Drehzahl des Antriebs 10 entweder auf ein Minimum reduzieren oder aber den Antrieb 10 auch vollständig anhalten, um beispielsweise Energie zu sparen.

Der Antrieb 10 ist in Form eines Elektromotors gestaltet, es ist jedoch auch möglich jeden anderen geeigneten Motor oder Antriebsmöglichkeit zu verwenden.

Die Antriebswelle 20 ist mit der Bohrkrone 30 verbunden und überträgt das durch den Antrieb 10 erzeugte Drehmoment auf die Bohrkrone 30. Die Bohrkrone 30 dient dazu durch das erzeugte Drehmoment und einen entsprechenden auf die Bohrkrone 30 ausgeübten Anpressdruck ein Bohrloch B in den Werkstoff W zu bohren.

Die Steuereinheit 50 ist in der Werkzeugmaschine 1 positioniert und mit dem Antrieb 10, dem Positions- und Wegsensor 16, dem Beschleunigungssensor 40, der Vakuumpumpe 17 und dem Filter 60 verbunden. Die Steuereinheit 50 dient primär dazu die Parameter und insbesondere die Drehzahl des Antriebs 10 zu steuern und zu regeln. Wie bereits vorstehend beschrieben, steuert und regelt die Steuereinheit 50 darüber hinaus auch die Vakuumpumpe 17 und sammelt sowie verarbeitet Daten von dem Positions- und Wegsensor 16, dem Filter 60 und dem Beschleunigungssensor 40.

Der Beschleunigungssensor 40, welcher auch als Beschleunigungsmesser, Accelerometer, B-Sensor oder G-Sensor bezeichnet werden kann, ist mit der Steuereinheit 50 verbunden und dient dazu, Beschleunigungswerte zu messen. Durch das Messen von Beschleunigungswerten können Vibrationen bzw. Schwingungen sowohl an der Werkzeugmaschine 1, an dem Werkzeug 30, am Werkzeugständer 13 als auch im Fußelement 15 erfasst werden. Das Erfassen von Vibrationen und Schwingungen im Fußelement 15 dient insbesondere dazu festzustellen, ob kritische Schwellenwerte in Bezug auf die Vibrationen und Schwingungen überschritten sind, welche dazu führen können, dass sich das Fußelement 15 des Werkzeugständers 13 von dem Untergrund bzw. dem zu bearbeitenden Werkstoff W löst. Wenn kritische Schwellenwerte in Bezug auf die Vibrationen und Schwingungen überschritten werden, kann mit Hilfe der Steuereinheit 50 die Leistung der Vakuumpumpe 17 erhöht werden, so dass entsprechend die Anpresskraft ebenfalls erhöht wird, um ein durch die Vibrationen und Schwingungen verursachtes Ablösen des Fußelements 15 von dem zu bearbeitenden Werkstoff W entgegenzuwirken.

Für den Fall, dass ein Werkzeugständer 13 ohne Fußelement 15 mit angeschlossener Vakuumpumpe 17 verwendet wird, sondern stattdessen ein Werkzeugständer 13 mit einem Fußelement 15, welches mit einer Anzahl an Bolzen bzw. Schrauben an dem zu bearbeitenden Werkstoff W befestigt wird, dient der Beschleunigungssensor 40 ebenfalls dazu Vibrationen und Schwingungen im Fußelement 15 zu erfassen, die auf ein mögliches Lösen der Bolzen bzw. Schrauben schliessen lassen.

Darüber hinaus dient der Beschleunigungssensor 40 auch dazu festzustellen, in welcher Lage bzw. Position sich die Werkzeugmaschine 1 befindet. Das heisst, unter Zuhilfenahme der Erdanziehungskraft kann der Beschleunigungssensor 40 bestimmen, ob die Werkzeugmaschine 1 mit dem Werkzeugständer 13 an einem horizontal ausgerichteten Werkstoff W (auf dem Boden in Fig. 1) oder aber an einem vertikal ausgerichteten Werkstoff W (an einer Wand in Fig. 2) befestigt ist. Wie nachfolgend detailliert beschrieben, ist diese Lage bzw. Position der Werkzeugmaschine 1 insbesondere für das Beenden des Kernbohrvorgangs von Bedeutung.

Der Filter 60 steht ebenso in Verbindung mit der Steuereinheit 50 und hat die Funktion bestimmte Frequenzen eines gemessen Signals zu filtern, so dass nur bestimmte Frequenzen bzw. ein bestimmter Frequenzbereich ausgefiltert und zur Verfügung steht. Das gemessene Signal ist im vorliegenden Fall der Beschleunigungswert, der durch die Schwingungen und Vibrationen an der Werkzeugmaschine 1 und an dem Werkzeug 30 erzeugt wird.

Bei dem Kernbohrvorgang überträgt der Antrieb 10 der Werkzeugmaschine 1 ein Drehmoment über die Antriebswelle 20 auf das als Bohrkrone ausgebildete Werkzeug 30, welche daraufhin in eine Rotationsbewegung in Pfeilrichtung A oder B um die Achse C versetzt wird. Die Drehzahl des Antriebs 10 und der Bohrkrone 30 entspricht dabei einem relativ niedrigen Wert, d.h. einer Anbohrdrehzahl bzw. Anbohrgeschwindigkeit. Die mit der Anbohrgeschwindigkeit betriebene Bohrkrone 30 wird daraufhin in Pfeilrichtung D nach unten auf den Werkstoff W zubewegt. Um die Werkzeugmaschine 1 und die Bohrkrone 30 kontrolliert bewegen zu können, dient der vorstehend beschriebene Werkzeugständer 13.

Nach Beendigung des Kernbohrvorgangs wird die Bohrkrone 30 in Pfeilrichtung E wieder aus dem in den Werkstoff W gebohrten Bohrloch B gezogen. Jedoch wird hierbei die Bohrkrone 30 nicht in einer Bewegung vollständig aus dem Bohrloch B gezogen. Insbesondere in dem Fall, bei dem ein Bohrloch B in einen vertikal angeordneten Werkstoff W gebohrt werden soll (vgl. Fig. 2), sollte die Bohrkrone 30 nach Beendigung des Bohrvorgangs aus Sicherheitsgründen noch mit einem Mindestmass in dem Bohrloch B verbleiben. Wie bereits vorstehend beschrieben, kann mit Hilfe des Beschleunigungssensors 40 bestimmt werden, ob die Werkzeugmaschine 1 und der Werkzeugständer 13 an einem horizontal ausgerichteten Werkstoff W (auf dem Boden in Fig. 1) oder aber an einem vertikal ausgerichteten Werkstoff W (an einer Wand in Fig. 2) befestigt ist. Nach Beendigung des Bohrvorgangs befindet sich der nicht dargestellte Bohrkern im Inneren der Bohrkrone 30, wodurch ein relativ hohes Zusatzgewicht an der Bohrkrone 30 wirkt. Durch dieses Zusatzgewicht des Bohrkerns ist es möglich, dass sich der Werkzeugständer 13 mit der Werkzeugmaschine 1 von dem vertikal angeordneten Werkstoff W, d.h. von der Wand (vgl. Fig. 1), löst und abstützen kann. Dadurch, dass die Bohrkrone 30 noch mit einem Mindestmass ihrer Länge im Bohrloch B verbleibt, kann sichergestellt werden, dass sich die Bohrkrone 30 noch in dem Bohrloch B abstützt und nicht das gesamte Gewicht von Bohrkrone 30 und Bohrkern auf die Befestigung des Werkzeugständers 13 an dem vertikal angeordneten Werkstoff W, d.h. an der Wand (vgl. Fig. 1), wirkt. Wie bereits vorstehend erwähnt, wird mit Hilfe des Positions- und Wegsensors 16 sowie der Steuereinheit 50 die Position der Bohrkrone 30 im Bohrloch B erfasst, wodurch das Herausziehen der Bohrkrone 30 aus dem Bohrloch B entsprechend gestoppt werden kann, wenn die Bohrkrone 30 noch mit einem Mindestmass ihrer Länge im Bohrloch B ist. Bei diesem Mindestmass kann es sich beispielsweise um die Hälfe der Länge der Bohrkrone 30 oder aber auch nur um ein paar Zentimeter handeln. Das Mindestmass ist von einer Vielzahl an Parameter, wie z.B. dem Bohrkronendurchmesser, der Bohrkronenlänge, der Art der Befestigung des Werkzeugständers 13 am Werkstoff W und dem Werkstoff W selbst, abhängig und kann in der Steuereinheit 50 voreingestellt werden.

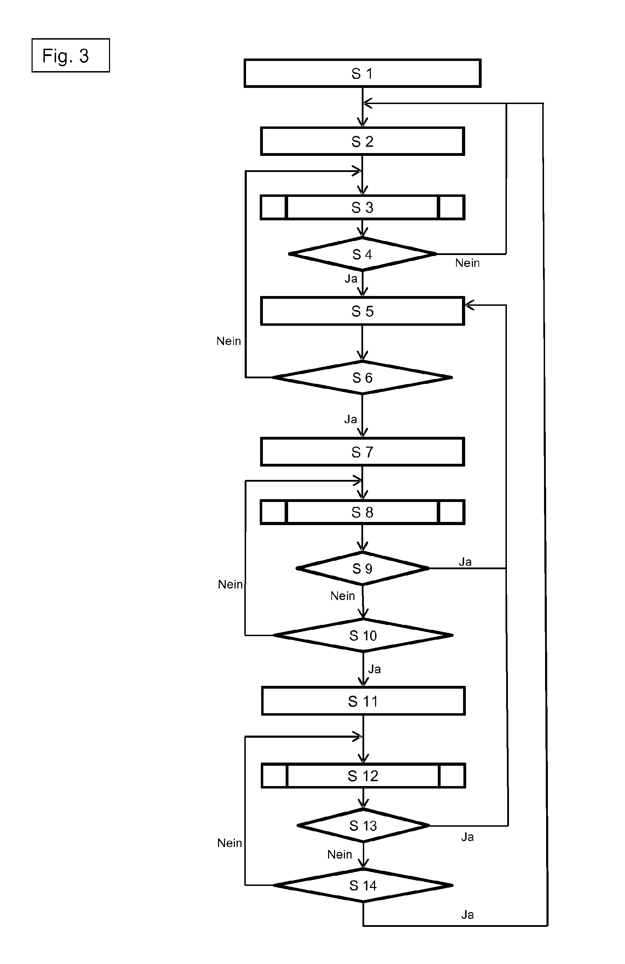

Nachfolgend wird anhand der Fig. 3, 4 und 5 das Steuerverfahren für die Werkzeugmaschine 1 im Falle des Vorliegens einer durch Schwingungen und Vibrationen erzeugten Resonanz an der Werkzeugmaschine 1 und insbesondere an dem Werkzeug 30 beschrieben.

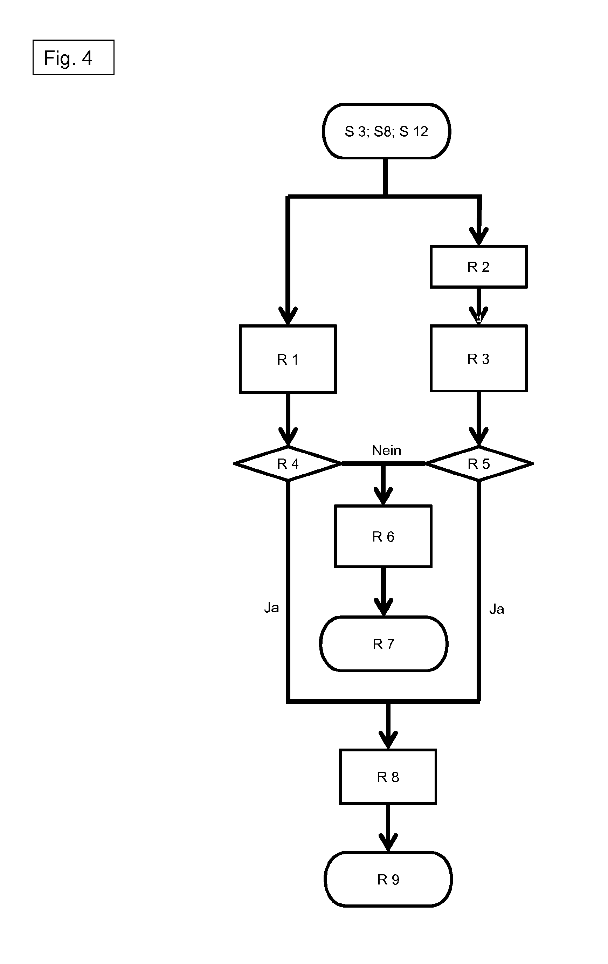

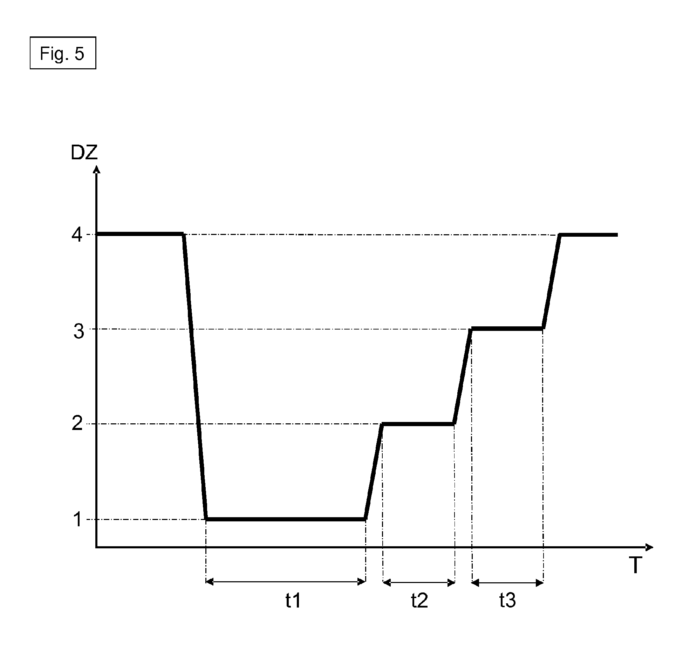

Wie in Fig. 3 dargestellt, erfolgt der Betrieb der Werkzeugmaschine 1 für einen Bohrvorgang zunächst in Schritt S1 mit dem Start des Antriebs 10 der Werkzeugmaschine 1. Hierbei wird in Schritt S2 die Drehzahl DZ des Antriebs 10 auf einen Wert 4 festgelegt (vgl. Fig. 5). In Schritt S3 folgt eine Resonanzkontrolle, d.h. eine Überprüfung, ob eine durch Schwingen und Vibrationen ausgelöste Resonanz an der Werkzeugmaschine 1 vorliegt. Die Resonanzkontrolle ist detailliert in Fig. 4 dargestellt. Bei der Resonanzkontrolle wird mit Hilfe des Beschleunigungssensors 40 in Schritt R1 eine erste Amplitude eines Signals in Form einer Schwingung bzw. Vibrationen gemessen. Darüber hinaus wird dieses Signal mit Hilfe des Filters 60 in Schritt R2 so gefiltert, dass lediglich ein bestimmter Frequenzbereich des Schwingungs- bzw. Vibrationssignals vorliegt. Eine zweite Amplitude dieses in einem bestimmten Frequenzbereich gefilterten Schwingungs- bzw. Vibrationssignals wird dann in schritt R3 mit Hilfe des Beschleunigungssensors 40 gemessen.

Mit Hilfe der Steuereinheit 50 wird in Schritten R4 geprüft, ob die erste Amplitude des Schwingungs- bzw. Vibrationssignals eine erste vorbestimmte Größe übersteigt. Ebenso wird mit Hilfe der Steuereinheit 50 in Schritt R5 gemessen, ob die zweite Amplitude des Schwingungs- bzw. Vibrationssignals eine zweite vorbestimmte Größe übersteigt.

Für den Fall, dass die erste Amplitude die erste Größe nicht übersteigt und/oder die zweite Amplitude die zweite Größe nicht übersteigt, wird durch die Steuereinheit in Schritt R6 festgestellt, dass keine Resonanz vorliegt. Die Resonanzkontrolle ist damit in Schritt R7 beendet. In Schritt S4 ist damit festgestellt, dass keine Resonanz vorliegt und die Drehzahl des Antriebs 10 bleibt auf einem Wert 4 (vgl. Fig. 5).

Für den Fall, dass jedoch sowohl die erste Amplitude die erste Größe übersteigt als auch die zweite Amplitude die zweite Größe übersteigt, wird durch die Steuereinheit 50 in Schritt R8 festgestellt, dass eine durch die Schwingungen bzw. Vibrationen ausgelöste Resonanz vorliegt. Die Resonanzkontrolle ist damit in Schritt R9 beendet (vgl. Fig. 4). In Schritt S4 ist damit festgestellt, dass eine Resonanz vorliegt, wodurch in Schritt S5 durch die Steuereinheit 50 die Drehzahl des Antriebs 10 von dem Wert 4 auf den Wert 1 reduziert, um damit die Resonanz zu beseitigen (vgl. Fig. 5). Der Wert 1 für die Drehzahl ist dabei so gewählt, dass bei diesem Wert 1 zu keiner Zeit eine Resonanz vorliegt. Der Antrieb 10 verbleibt in Schritt S6 auf dem Wert 1 bis zum Ablauf eines vorbestimmten Zeitintervalls t1. Nach Ablauf dieses Zeitintervalls t1 wird in Schritt S7 die Drehzahl des Antriebs 10 von dem Wert 1 auf den Wert 2 erhöht (vgl. Fig. 5). Hierbei ist für die Drehzahl des Antriebs 10 der Wert 3 höher als der Wert 2 jedoch niedriger als der Wert 1. Wenn der Zeitintervall t1 nach Beendigung der Resonanzkontrolle S3 noch nicht beendet ist, erfolgt eine weitere Resonanzkontrolle S3.

In Schritt S8 wird wieder eine Resonanzkontrolle durchgeführt. Diese Resonanzkontrolle in Schritt S8 entspricht der vorstehend beschriebenen Resonanzkontrolle in Schritt S3 gemäß der Fig. 4. Im Falle des Vorliegens einer Resonanz wird in Schritt S9 die Drehzahl des Antriebs 10 von dem Wert 2 wieder auf den Wert 1 reduziert, da bei dem Wert 1 für die Drehzahl definitiv keine Resonanz vorliegt. Wird jedoch in Schritt S9 durch die Steuereinheit 50 und nach Ablauf eines Zeitintervalls t2 in Schritt S10 festgestellt, dass keine Resonanz vorliegt, wird in Schritt S11 die Drehzahl des Antriebs 10 auf einen Wert 3 erhöht, vgl. Fig. 3. Hierbei ist für die Drehzahl des Antriebs 10 der Wert 3 höher als der Wert 2 und höher als der Wert 1 jedoch niedriger als der Wert 4, vgl. Fig. 5. Wenn der Zeitintervall t2 nach Beendigung der Resonanzkontrolle S8 noch nicht beendet ist, erfolgt eine weitere Resonanzkontrolle S8.

In Schritt S12 wird erneut eine Resonanzkontrolle durchgeführt. Diese Resonanzkontrolle in Schritt S12 entspricht wieder der vorstehend beschriebenen Resonanzkontrolle in Schritt S3 oder in Schritt S8 gemäß der Fig. 4. Im Falle des Vorliegens einer Resonanz wird in Schritt S13 die Drehzahl des Antriebs 10 von dem Wert 3 wieder auf den Wert 1 reduziert, da bei dem Wert 1 für die Drehzahl definitiv keine Resonanz vorliegt. Wird jedoch durch die Steuereinheit 50 nach Ablauf eines Zeitintervalls t3 in Schritt S14 festgestellt, dass keine Resonanz vorliegt, wird die Drehzahl des Antriebs 10 auf einen Wert 1 erhöht, vgl. Fig. 5. Wenn der Zeitintervall t3 nach Beendigung der Resonanzkontrolle S12 noch nicht beendet ist, erfolgt eine weitere Resonanzkontrolle S12.

Das vorstehend beschriebene Verfahren mit den Schritt S1 bis S14 zusammen mit den Schritten R1 bis R9 wiederholt sich während eines Bohrvorgangs.

## Patentansprüche

1. Verfahren zum Steuern einer Werkzeugmaschine (1) enthaltend einen Antrieb (10) zum Antreiben eines Werkzeugs (30) und eine Steuereinheit (50) beim Bearbeiten eines Werkstücks (W) mit den Verfahrensschritten
- Festlegen der Drehzahl des Antriebs (10) auf einen ersten Wert,
- Messen einer ersten Amplitude eines Signals,
- Filtern des Signals in einem vorbestimmten Frequenzbereich,
- Messen einer zweiten Amplitude des gefilterten Signals,
- Reduzieren der Drehzahl des Antriebs (10) auf einen zweiten Wert, wenn die erste Amplitude eine erste vorbestimmte Grösse übersteigt und die zweite Amplitude eine zweite vorbestimmte Grösse übersteigt, und
- Schrittweises Steigern der Drehzahl des Antriebs (10) auf den ersten Wert, wobei jeder Steigerungsschritt der Drehzahl erst erfolgt, nachdem für ein vorbestimmtes Zeitintervall die erste Amplitude unterhalb der ersten vorbestimmten Grösse und die zweite Amplitude unterhalb der zweiten vorbestimmten Grösse verbleibt.

2. Werkzeugmaschine (1) zur Anwendung des Verfahrens nach Anspruch 1, enthaltend
- einen Antrieb (10) zum Antreiben eines Werkzeugs (30),
- einen Beschleunigungssensor (40) zum Messen einer ersten Amplitude und einer zweiten Amplitude eines Signals;
- einen Filter (60) zum Filtern des Signals in einem vorbestimmten Frequenzbereich, und
- eine Steuereinheit (50) zur Steuerung wenigstens der Drehzahl des Antriebs (10).
